Europäisches Patentamt

European Patent Office

Office européen des brevets

(19)

(11) EP 0 531 499 B1

(12) **FASCICULE DE BREVET EUROPEEN**

(45) Date de publication et mention
de la délivrance du brevet:
**16.06.1999 Bulletin 1999/24**

(21) Numéro de dépôt: **92908236.0**

(22) Date de dépôt: **27.03.1992**

(51) Int Cl.6: **G02B 6/28**

(86) Numéro de dépôt international:
**PCT/FR92/00277**

(87) Numéro de publication internationale:
**WO 92/17803 (15.10.1992 Gazette 1992/26)**

(54) **FILTRE TRANSVERSE ELECTRIQUE A FONCTIONNEMENT OPTIQUE**

OPTISCH ARBEITENDER ELEKTRISCHER TRANSVERSALER FILTER

OPTICALLY OPERATED ELECTRIC TRANSVERSAL FILTER

(84) Etats contractants désignés:
**DE FR GB IT**

(30) Priorité: **29.03.1991 FR 9103854**

(43) Date de publication de la demande:
**17.03.1993 Bulletin 1993/11**

(73) Titulaire: **THOMSON-CSF**
**75008 Paris (FR)**

(72) Inventeurs:
• **TOURNOIS, Pierre**
**F-92045 Paris-La Défense Cédex 67 (FR)**
• **DOLFI, Daniel**
**F-92045 Paris-La Défense Cédex 67 (FR)**
• **HUIGNARD, Jean-Pierre**
**F-92045 Paris-La Défense Cédex 67 (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**EP-A- 0 331 462**

• **PROCEEDINGS OF THE SOCIETY OF
PHOTO-OPTICAL INSTRUMENTATION
ENGINEERS vol. 176, 1979, BELLINGHAM, US
pages 17 - 27; TAYLOR: 'fiber and integrated
optical devices for signal processing'**

## Description

L'invention concerne un filtre transverse électrique à fonctionnement optique et plus particulièrement un filtre transverse programmable utilisant une architecture optique.

Ce filtre transverse programmable est plus particulièrement applicable au filtrage adapté de signaux à large bande.

Le principe du filtre transversal est la sommation de signaux prélevés avec différents retards et différents poids, le long d'une ligne de transmission excitée par le signal à filtrer. A l'aide d'un tel filtre linéaire, on cherche à déterminer la date d'apparition d'un signal p(t) connu a priori. Ce signal p(t) transitoire de durée finie T, est en réalité mélangé à un bruit b(t) supposé indépendant de p(t). C'est alors le signal x(t) = p(t) + b(t) qu'il est nécessaire de filtrer. Lorsqu'un tel filtre est réalisé et qu'il maximise le rapport signal à bruit sur le temps T, il est dit adapté. Dans le cas d'un bruit blanc idéal, la réponse impulsionnelle h(t) du filtre adapté est h(t) = p(-t). Lorsque le bruit n'est pas blanc, ce filtre n'est plus optimal mais il permet cependant encore de déterminer la date d'arrivée de p(t) dans la majorité des cas.

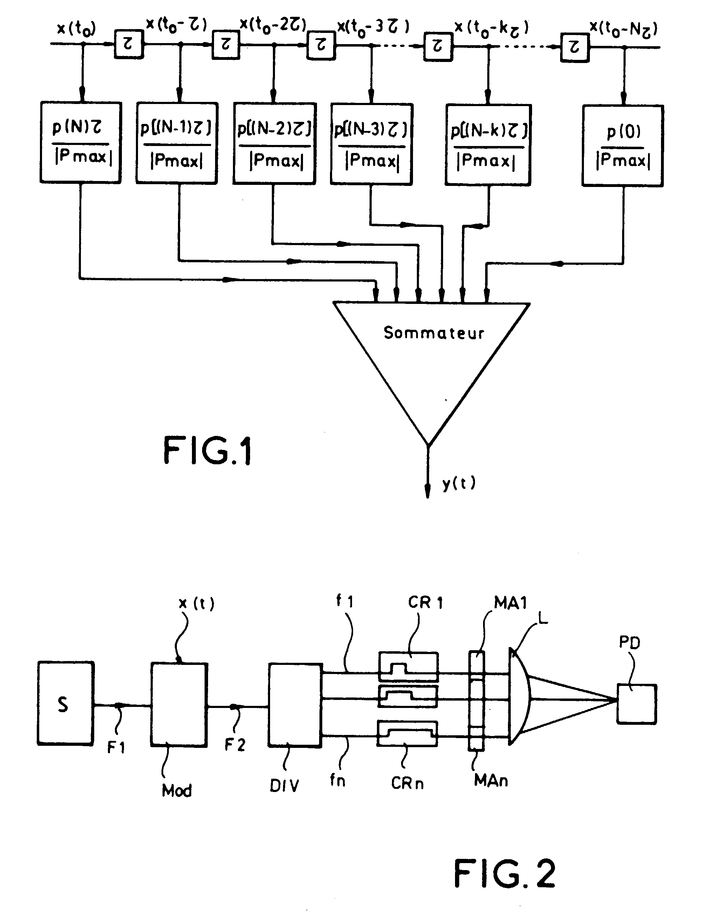

La réalisation de filtres adaptés est obtenue dans la plupart des cas par la méthode de pondération telle que décrite dans le document : "J. Max - "Méthodes et techniques de traitement du signal et applications aux mesures physiques" Masson Editeurs 1987. On injecte en permanence, le signal x(t) à l'entrée d'une ligne à retard constituée de N éléments donnant chacun un retard T comme cela est représenté en figure 1. On suppose en outre disposer d'un échantillonnage sur N+1 points du signal p(t) : p(o), p($\tau$), p(N$\tau$). La sortie de chaque élément constituant la ligne à retard est pondérée par un coefficient $\lambda_k$ tel que :

$$\lambda_k = p \, [(N-k)\tau] \, / \, |P_{max}|$$

où IP$_{max}$I est la valeur maximale du module de p(t). On a ainsi -1 < $\lambda_k$ < 1. Lorsqu'à un instant donné $t_o$, on fait la somme des N+1 sorties pondérées on dispose d'un signal y($t_o$) tel que :

$$y(t_o) = \sum_{k=o}^{N} \chi \, (t_o - k\tau).p \, [(N-k)\tau] \text{ avec } N\tau = T \text{ (où T est la durée du signal p(t))}$$

$$= \sum_{k=o}^{N} x \, (t_k) \, p \, [t_k - (t_o - T)] \text{ avec } t_k = (t_o - k\tau)$$

Ceci est bien la sortie du filtre adapté à l'instant $t_o$ - T.

La technique actuelle permet la réalisation d'un tel dispositif par des moyens électriques mais elle est alors limitée aux basses et moyennes fréquences. D'autres solutions, à base de fibres optiques ont été proposées telle que celle décrite dans le document K.P. Jackson - H.J. Shaw - "Fiber-optic delay-line signal processors" in Optical Signal Processing" edité par J.L. Horner, Academic Press, ou dans le document "Fiber and integrated optical devices for signal processing" de Henry F. Taylor publié par SPIE, vol. 176 - Guided Wave Optical Systems - 1979, pages 17-27, mais elles se heurtent à la difficulté de réalisation d'un grand nombre de points de couplage.

Le document EP 0 331 462 fournit un système comportant p unités de retard disposées en série. Cependant, ce dispositif ne comporte pas de moyen de modulation spatiale de polarisation en entrée des unités de retard de façon à diviser l'onde incidente en une pluralité de canaux modulés différemment. En effet, dans ce document, chaque unité à retard ne comporte qu'un seul modulateur de polarisation, ce qui limite le nombre d'échantillons traités par le système.

Le dispositif selon l'invention permet de résoudre ces deux problèmes à savoir, il permet un fonctionnement à hautes fréquences avec un grand nombre de points de couplage, il autorise donc un grand nombre d'échantillons sur des signaux à très hautes fréquences, typiquement N = 1024 de 0 à 20 GHz.

L'invention concerne donc un filtre transverse tel que défini à la revendication 1.

Les différents objets et caractéristiques de l'invention apparaîtront plus clairement dans la description qui va suivre et dans les figures annexées qui représentent :

-   la figure 1, un système selon l'art connu déjà décrit ;
-   la figure 2, un exemple général de réalisation d'un filtre transverse illustrant le principe à la base de l'invention ;
-   la figure 3, un exemple de réalisation détaillé d'un filtre transverse selon l'invention ;
-   la figure 4, un exemple de réalisation d'un sous-ensemble de création de retards ;
-   la figure 5, une variante de réalisation d'un sous-ensemble de création de retards ;

- la figure 6, une variante de réalisation des moyens de détection de l'intensité lumineuse.

En se reportant à la figure 2, on va donc maintenant décrire un exemple général de réalisation d'un filtre transverse illustrant le principe à la base de l'invention.

Ce filtre comporte :

- une source S émettant un faisceau lumineux F1 ;
- un modulateur électrooptique Mod recevant le faisceau F1 ainsi qu'un signal électrique de commande x(t), qui permet de moduler le faisceau de façon à fournir un faisceau F2 modulé par le signal électrique x(t) auquel on désire appliquer un filtrage transverse c'est-à-dire détecter une information de fréquences réparties sur un temps T ;
- un séparateur de faisceaux DIV recevant le faisceau F2 et le répartissant sur n canaux élémentaires f1 à fn (où n est choisi égal au nombre N d'échantillons désirés) ;
- des circuits de création de retards optiques CR1 à CRn situés chacun en série sur un canal élémentaire f1 à fn ;
- des modulateurs d'amplitude MA1 à MAn modulant l'intensité de la lumière de chaque canal élémentaire ;
- un dispositif de focalisation L focalisant les différents canaux ;
- un dispositif détecteur d'intensité lumineuse PD (photodétecteur) recevant le faisceau focalisé.

Ainsi en affectant des retards adéquats ($\tau$, $2\tau$, $3\tau$, ... $N\tau$) à chaque circuit à retard CR1 à CRn on trouvera une information déterminée contenue dans le signal x(t) par détection d'un pic d'intensité lumineuse.

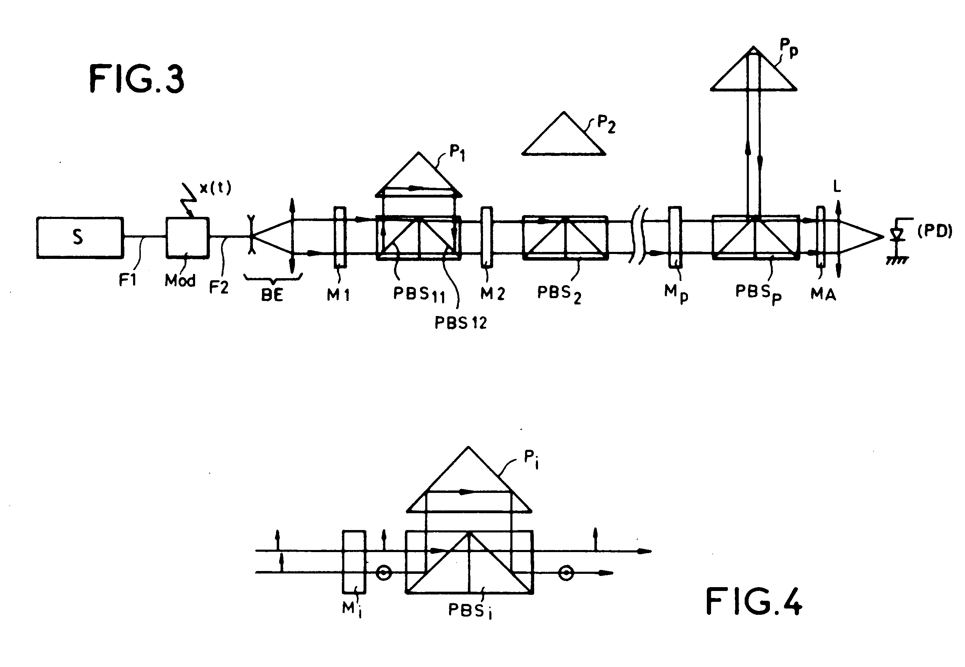

En se reportant à la figure 3, on va maintenant décrire un exemple de réalisation détaillé du dispositif de l'invention.

Le faisceau F1 polarisé linéairement issu d'une source laser S est couplé dans un modulateur Mod. Celui-ci est par exemple un modulateur intégré sur $LiNbO_3$ et possède une bande passante s'étendant de 0 à 20 GHz. Il est excité par le signal à filtrer x(t). Le faisceau F2 polarisé linéairement issu de Mod est ensuite étendu au moyen d'un système afocal BE de manière à couvrir la surface d'un modulateur spatial de lumière $M_1$. Ce modulateur est par exemple une cellule à cristal liquide comportant n = mxm éléments-images, où n est choisi égal au nombre N d'échantillons désirés. Sur chaque élément image la polarisation de la lumière incidente peut être tournée de 0° à 90° suivant la tension appliquée. On peut noter que seuls deux états (0 et 90°) sont nécessaires et donc, des cellules à cristaux liquides ferroélectriques sont bien adaptées. Le modulateur spatial $M_1$ est disposé de telle sorte qu'il découpe n = mxm voies parallèles dans le faisceau laser étendu. Un ensemble de cubes séparateurs de polarisation $PBS_{11}$ et $PBS_{12}$ et d'un prisme à réflexion totale P1 est placé en série avec le modulateur $M_1$. Comme on le voit sur la figure 4, le choix de l'état de la polarisation sur chaque élément image du modulateur $M_1$ permet de choisir le chemin suivi par chacun des mxm canaux comportant la porteuse optique du signal x(t). L'ensemble modulateur spatial $M_1$ - cubes séparateurs $PBS_{11}$/$PBS_{12}$ - dispositif de réflexion P1 constitue un premier sous-ensemble de création de retard.

Ce premier sous-ensemble de création de retard est suivi par un deuxième sous-ensemble de création de retard placé en série (modulateur spatial $M_2$ - cubes séparateurs $PBS_{21}$/$PBS_{22}$ - dispositif de réflexion P2) et ainsi de suite jusqu'à un p[ième] sous-ensemble de création de retard (modulateur spatial Mp - cubes séparateurs PBSpl/PBSp2 dispositif de réflexion Pp). Ces différents sous-ensembles sont tels que chaque élément image de chaque modulateur spatial $M_2$ à $M_p$ est aligné sur un canal élémentaire créé par le modulateur spatial $M_1$. Lorsque le faisceau étendu a traversé tous les cubes séparateurs ($PBS_i$), il passe dans un modulateur spatial d'amplitude MA. C'est par exemple une cellule à cristal liquide, identique aux modulateurs spatiaux Mi, mais disposée entre polariseurs croisés pour moduler l'intensité du faisceau qui la traverse. Le modulateur MA permet d'affecter, sur chaque canal fk, l'amplitude de la porteuse optique d'un coefficient $\lambda_k$ précédemment défini. On dispose ensuite une lentille L qui assure la sommation de tous ces canaux parallèles sur une photodiode rapide PD. Cette sommation doit être incohérente pour ne pas être perturbée par des termes de déphasages optiques. Il faut donc que la longueur de cohérence du laser soit inférieure à la plus petite différence de marche permise par le système, c'est-à-dire par celle imposée par le plus petit incrément de retard. A l'instant $t_o$, la porteuse optique, sur chaque canal fk, avant traversée de MA, est de la forme :

$$S_k(t_o)=S_o \cdot \chi(t_o - k\tau) \cdot \left| \exp j\omega(t_o - k\tau) \right|^2$$

où :

- $\omega$ est la pulsation du laser,
- $\tau$ l'incrément de retard du dispositif (et $k\tau$ le retard induit sur le canal correspondant fk).

En effet les dispositifs de réflexion (prismes Pi) sont disposés de manière à définir des retards en progression

géométrique : $\tau$, $2\tau$, $4\tau$, ... $2^{(p-1)}\tau$ avec en outre le nombre p de sous-ensembles choisi de façon telle que $2^p = N$. A la traversée de MA chaque canal fk est affecté d'un coefficient $\lambda_k$ caractéristique du signal à détecter dans x(t) et devient ainsi :

$$S_k(t_o) = S_o . \lambda_k . \chi(t_o - k\tau)$$

$$= \left[ p \ ((N-k)\tau) . \ \chi(t_o - k\tau) / |P_{max}| \right]$$

La sommation étant incohérente, la photodiode PD délivre un photocourant proportionnel à la somme :

$$y(t_o) = \frac{1}{|P_{max}|} \sum_{k=o}^{N} p \ [(N-k)\tau] . \ \chi(t_o - k\tau)$$

qui est la sortie du filtre adapté à l'instant $t_o$ - T.

On peut remarquer que la reconfigurabilité des modulateurs spatiaux Mi n'est pas indispensable dans le cas présent, où $2^p = N$. En effet, les trajets peuvent être fixés une fois pour toutes et seule la valeur des $\lambda_k$ peut être modifiée. Les modulateurs spatiaux Mi peuvent donc être remplacés par des matrices fixes de lames $\lambda/2$ ($\lambda$ longueur d'onde du laser).

Une certaine reconfigurabilité du système peut cependant être utile lorsque le nombre p des sous-ensembles est choisi de façon telle que $2^P > N$. En effet, on peut choisir alors la séquence de retard,désirée :
$\tau$, $2\tau$, $4\tau$, ..., $2^{(p'-1)}.\tau$ où p'(<p) est tel que $2^{p'} = N$
ou
$\tau' = 2\tau$, $2\tau' = 4\tau$, $4\tau' = 8\tau$, ..., $2^{(p'-1)}.\tau' = 2^{p'}.\tau$
et ainsi adapter la bande passante du filtre à celle du signal p(t) à détecter.

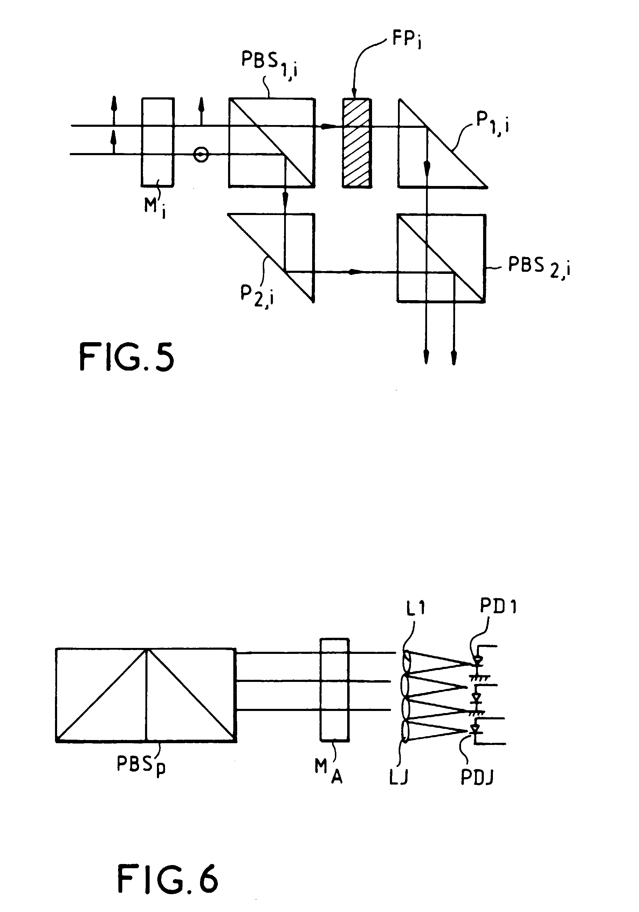

La figure 5 représente une variante de réalisation d'un sous-ensemble à retard.

Il comporte un dispositif (cube) séparateur de polarisation d'entrée $PBS_{1,i}$, deux dispositifs de réflexion (prisme) $P_{1,i}$ et $P_{2,i}$ et un dispositif (cube) de séparation ou recombineur de polarisations de sortie $PBS_{2,i}$. Ces quatre dispositifs déterminent pour les deux polarisations, deux trajets optiques de même longueur géométrique. Cependant l'un des trajets comporte une lame à faces parallèles FPi qui incorpore un retard optique dans le trajet optique. Les deux trajets optiques n'ont donc pas la même longueur optique. Une telle variante permet ainsi de réaliser des retards très faibles.

La figure 6 représente une variante de réalisation du dispositif de l'invention.

Dans cette variante, la lentille L est remplacée par une matrice de lentilles L1, ...Lj, ... LJ. Au foyer de chacune d'elle est placée une photodiode rapide PD1,...,$PD_j$($1 < j \leq J$). Chaque lentille permet la sommation de q canaux parallèles. Ainsi le modulateur MA est partagé en J domaines de q pixels chacun (avec Jxq = n pixels). A chaque domaine on associe une série de coefficients $\lambda_{k,j}$ permettant la reconnaissance d'un signal pj(t) présent dans x(t). Cela équivaut à disposer de J filtres adaptés en parallèle, le photocourant fourni par chaque photodiode étant le résultat du filtre de x(t) par le filtre correspondant à pj(t).

Selon une autre variante de réalisation, le nombre n de canaux est choisi supérieur au nombre N d'échantillons désiré, ce nombre N étant typiquement N = 1024. Dans cette variante, le nombre d'éléments images des modulateurs spatiaux Mi est n=mxm= Nxn'. A l'intérieur d'un même groupe de n' éléments images ou n' canaux, ceux-ci sont dans le même état d'excitation ou de polarisation. L'architecture proposée fournit ainsi N faisceaux de n' voies parallèles (dans le même état de polarisation). Chaque faisceau joue donc le rôle précédemment décrit d'un élément image. De même MA comporte mxm pixels. Les éléments images de ce modulateur spatial MA n'ont plus que deux états de transmission possibles 0 et 1. Ainsi en choisissant le nombre d'éléments images du modulateur MA à l'état passant dans un faisceau de n' voies, on affecte le poids désiré à la valeur de retard fournie par ce faisceau. Le contrôle des poids n'est plus alors analogique mais devient digital. Le nombre n' chiffre alors la dynamique des poids.

A titre d'exemple de réalisation, le filtre transverse selon l'invention peut être réalisé de la manière suivante :

S :                          Laser solide, pompé diode
                                  largement multimode, qqs 100 mW, $\lambda$=1,3 $\mu$m - 1,5 $\mu$m

| Mod : | modulateur optique intégré sur LiNbO$_3$ |
| | large bande 0 --> 20 GHz |
| | profondeur de modulateur 80 à 100 % |
| | pertes d'insertion 6 dB |

| Mi : | cellules à cristal liquide nématique twisté ou ferroélectrique 40 x 40 mm$^2$ |
| | n=mxm=32 x 32 pixels (ou 1024 pixels) commandés individuellement |
| | taux d'extinction entre polariseurs croisés : 1:1000 nombre p de Mi = 10 (soit 2$^p$ = 1024) |

| MA : | identique aux Mi mais placé entre polariseurs croisés |

| PD : | photodiode rapide |

| Valeur des retards : | pour 20 GHz de bande passante l'incrément $\tau$ = 25 ps 1024 incréments sont réalisés sur |
| | les 1024 voies (délimitées par les 1024 pixels) au moyen des 10 modulateurs Mi |

Le dispositif selon l'invention présente les avantages suivants :

- Il permet de filtrer des signaux de très haute fréquence et à large bande passante puisque la valeur de l'incrément de retard $\tau$ peut être aussi faible que voulue (voir figure 5 : le retard résulte de l'interposition d'une lame à faces parallèles sur le trajet d'une des polarisations).
- Le contrôle des poids $\lambda_k$ est assuré en parallèle sur un dispositif unique MA. En outre, ce contrôle indépendant sur chaque voie permet la compensation de la dispersion des niveaux résultant des différents chemins suivis.
- L'architecture proposée est entièrement, et à chaque instant reconfigurable. La valeur de l'incrément de retard peut ainsi être en permanence, adaptée à la bande passante du signal à filtrer.
- Un nombre n de voies supérieur à celui (N) des retards autorise la défaillance de certains éléments images sans affecter les performances du système.

Il est bien évident que la description qui précède n'a été faite qu'à titre d'exemple et que d'autres variantes peuvent être envisagées sans sortir du cadre de l'invention. Notamment, les dispositifs de création de retard (cellules à cristaux liquides, séparateurs de polarisation, etc.) ainsi que le modulateur d'amplitude peuvent être réalisés différemment de ce qui a été décrit.

## Revendications

1. Filtre transverse pour extraire une information déterminée d'un signal électrique x(t) donné, comportant :

   - un système optique (S, Mod) apte à émettre une onde optique (F2) modulée temporellement par le signal électrique x(t) à filtrer ;
   - un ensemble de création de retards optiques (M1, PBS11, PBS12 ; ... Mi, PBSi1, PBSi2 ; ... Mp, PBSp1, PBSp2), comportant une pluralité n de circuits de création de retards (CR1, ... CRk, ... CRn) disposés en parallèle les uns aux autres sur le trajet de l'onde optique modulée (F2) de façon à intercepter chacun une portion transversale respective (f1, ... fk, ... fn) de ladite onde et à affecter cette portion transversale respective d'un retard global prédéterminé ($\tau$, ... k.$\tau$, ... n.$\tau$) ;
   - une pluralité n de modulateurs d'amplitude (MA1, ..., MAk, ... MAn) disposés en aval dudit ensemble de création de retards de façon à intercepter chacun la portion transversale correspondante (f1, ... fk, ... fn) ainsi retardée de l'onde optique modulée pour affecter cette portion transversale retardée d'une pondération prédéterminée ($\lambda$1, ... $\lambda$k, ... $\lambda$n) ;
   - au moins un concentrateur de lumière (L ; L1, ... LJ) disposé en aval desdits modulateurs d'amplitude de façon à regrouper lesdites portions transversales (f1, ... fk, ... fn) ainsi individuellement retardées et pondérées de l'onde optique modulée ; et
   - au moins un photodétecteur (PD ; PD1 ...PDJ) disposé en aval dudit concentrateur de façon à recevoir la somme desdites portions transversales retardées et pondérées ainsi regroupées pour délivrer un signal électrique correspodant à ladite somme, ledit signal électrique ainsi délivré constituant ladite information prédéterminée extraite dudit signal électrique x(t) à filtrer ;

      caractérisé en ce que :

- le système optique (S, Mod) comporte une source optique (S) apte à émettre une onde optique donnée (F1), et un modulateur électrooptique (Mod) disposé en aval de la source optique, apte à être contrôlé par ledit signal électrique x(t) à filtrer pour transformer l'onde optique donnée (F1) en ladite onde optique (F2) modulée temporellement par ledit signal électrique x(t), ladite onde optique modulée (F2) étant par ailleurs polarisée linéairement ; et

- l'ensemble de création de retards (M1, PBS11, PBS12 ;...; Mi, PBSi1, PBSi2 ; ... ; Mp, PBSp1, PBSp2) comporte une pluralité p de sous-ensembles de création de retards (Mi, PBSi1, PBSi2) placés en série les uns à la suite des autres sur le trajet de l'onde optique modulée (F2) de façon à intercepter chacun la totalité de ladite onde optique ; chaque sous-ensemble (Mi, PBSi1, PBSi2) comporte un modulateur spatial de polarisation (Mi) présentant n éléments-images aptes à diviser l'onde optique amont en n canaux élémentaires (f1, ... fk, ... fn) et à moduler sélectivement la polarisation de la lumière devant être véhiculée sur chacun desdits canaux, un premier séparateur de polarisations (PBSi1) commun aux différents canaux élémentaires pour aiguiller sélectivement la lumière de chaque canal (fk), en fonction de sa polarisation, vers un premier chemin optique de longueur optique donnée ou un deuxième chemin optique de longueur optique supérieure induisant un retard partiel prédéterminé ($2^{i-1}.\tau$) par rapport au premier chemin optique, et un combineur de faisceaux (PBSi2) pour recombiner les deux chemins optiques de chaque canal (fk) en un chemin optique commun apte à transmettre la lumière de chaque canal vers l'élément-image correspondant du modulateur spatial de polarisation du sous-ensemble suivant ou vers le photodétecteur ; chacun desdits n éléments images desdits p modulateurs spatiaux de polarisation successifs (M1, ... Mi, ... Mp) étant sélectionné de façon à moduler la lumière le traversant de manière telle qu'il en résulte, pour la lumière se propageant sur un canal donné (fk) au travers des p sous-ensembles successifs, un chemin optique global induisant un retard global, constitué par la somme sélective desdits retards partiels ($\tau$, $2\tau$, ... $2^{i-1}.\tau$, ... $2^{p-1}.\tau$), qui est choisi égal audit retard global prédéterminé ($k.\tau$) ; lesdits n chemins optiques globaux suivis par la lumière sur lesdits n canaux (f1, ... fk, ... fn) au travers desdits p sous-ensembles constituant lesdits n circuits de création de retards (CR1, ... CRk, ... CRn) induisant lesdits retards globaux prédéterminés ($\tau$, ... $k\tau$, ... $n.\tau$).

2. Filtre selon la revendication 1, caractérisé en ce qu'il comporte un dispositif d'expansion optique (BE) adaptant la section du faisceau (F2) transmis par le modulateur électrooptique (Mod) à la surface des modulateurs spatiaux de polarisations (M1, ... Mp).

3. Filtre selon la revendication 1, caractérisé en ce que le modulateur spatial (Mi) de chacun des sous-ensembles de création de retards comporte une cellule à cristal liquide comportant au moins autant d'éléments images qu'il y a de canaux élémentaires à créer, chaque élément image comportant des moyens de commande permettant de faire tourner à 90° la direction de polarisation de lumière.

4. Filtre selon la revendication 1, caractérisé en ce que chaque séparateur de polarisation (PBS1) est adapté pour transmettre la lumière de la première polarisation selon la direction de sortie sensiblement colinéaire avec celle de la lumière incidente vers un sous-ensemble suivant (M2, PBS2, P2) ou vers le photodétecteur et pour réfléchir la lumière de la deuxième polarisation vers le deuxième chemin optique, lequel retransmet la lumière selon une direction colinéaire à la direction de sortie.

5. Filtre selon la revendication 4, caractérisé en ce que le combineur de faisceau (PBSi2) de chaque sous-ensemble comporte un séparateur de polarisations placé en série avec le premier séparateur (PBSi1) sur la direction de sortie transmettant la première polarisation, le deuxième chemin optique étant couplé à ce deuxième séparateur de polarisation (PBSi2) de façon que la lumière provenant du deuxième chemin optique soit réfléchie sur la direction de sortie.

6. Filtre selon la revendication 1, caractérisé en ce que l'ensemble des modulateurs d'amplitude (MA, ... MA1, ... MAn) est constitué par une cellule à cristal liquide comportant autant d'éléments image qu'il y a de canaux élémentaires, chaque élément- image étant placé sur la direction d'un canal élémentaire.

7. Filtre selon la revendication 6, caractérisé en ce que chaque élément-image de la cellule à cristal liquide a deux états de transmission possibles : état passant et état bloqué.

8. Filtre selon la revendication 1, caractérisé en ce que le concentrateur de faisceau (L) comporte une lentille (L).

9. Filtre selon la revendication 1, caractérisé en ce que le concentrateur comporte un nombre J de lentilles (L1,..., LJ), lesdites lentilles étant suivies d'un nombre identique de photo-détecteurs (PD1, ...PGJ), chaque lentille focalisant la lumière d'un nombre déterminé (n') de canaux sur un photodétecteur correspondant.

10. Filtre selon la revendication 1, caractérisé en ce que le premier et le deuxième chemins optiques de chaque sous-ensemble ont une même longueur géométrique, l'un des deux chemins comportant en outre une lame à faces parallèles (PF).

11. Filtre selon la revendication 10, caractérisé en ce que dans chaque sous-ensemble, la lumière de la première polarisation transmise par le premier séparateur de polarisation (PBS1i) est réfléchie par un premier dispositif de réflexion (p1) vers un deuxième séparateur de polarisations (PBS2i) et que la lumière de la deuxième polarisation réfléchie par le premier séparateur de polarisations (PBS1i) est réfléchie par un deuxième dispositif de réflexion (P2i) vers le deuxième séparateur de polarisations (PBS2i) de telle façon que celui-ci rende colinéaires la lumière des deux polarisations.

12. Filtre selon la revendication 11, caractérisé en ce que les différents sous-ensembles de création de retards disposés en série comportent des lames à faces parallèles d'épaisseurs différentes.

13. Filtre transverse selon la revendication 12, caractérisé en ce que ladite pluralité de modulateurs d'amplitude (MA1, ..., MAn) située sur les canaux élémentaires respectifs (f1, ... fn) est constituée par un modulateur spatial (MA) comprenant plusieurs éléments images par canal, chaque élément image ayant deux états optiques possibles (bloquant ou passant), le nombre d'éléments images sélectionnés dans l'état passant permettant d'affecter ledit poids prédéterminé (Ak) à la valeur du retard dudit canal (fk).

14. Filtre transverse selon la revendication 3, caractérisé en ce que chaque cellule à cristal liquide (Mi) comporte plusieurs groupes d'éléments images, chaque groupe correspondant à un canal de création de retard.

15. Filtre selon la revendication 1, caractérisé en ce que les éléments constitutifs de chaque sous-ensemble de création de retards sont agencés de façon à définir des retards variant, d'un sous-ensemble au suivant, selon une progression géométrique ($\tau$, $2\tau$, ... $2^{i-1}.\tau$, ... $2^{p-1}.\tau$), le nombre p de sous-ensembles étant alors choisi en fonction du nombre n de canaux élémentaires générés par chaque modulateur de polarisation (M1, ... Mp) de façon telle que $2^p = n$.

16. Filtre selon la revendication 15, caractérisé en ce que n est choisi égal à 1024, p étant alors égal à 10.

17. Filtre selon la revendication 1, caractérisé en ce qu'il est agencé de façon que le retard global prédéterminé ($k.\tau$) affecté au canal correspondant (fk) est différent des retards ($\tau$, $2\tau$, ... $n.\tau$) affectés aux autres canaux (f1, f2, ... fn).

**Patentansprüche**

1. Transversalfilter, das eine bestimmte Information in einem gegebenen elektrischen Signal x(t) erfassen soll,

   - mit einem optischen System (S, Mod), das eine durch das zu filternde elektrische Signal x(t) zeitlich modulierte Lichtwelle (F2) aussenden kann,
   - mit einer Einheit zur Erzeugung optischer Verzögerungen ($M_1$, $PBS_{11}$, $PBS_{12}$; ..., $M_i$, $PBS_{i1}$, $PBS_{i2}$; ..., $M_p$, $PBS_{p1}$, $PBS_{p2}$), die n Schaltungen zur Erzeugung von Verzögerungen (CR1, ..., CRk, ..., CRn) enthält, die zueinander parallel im Verlauf der modulierten Lichtwelle (F2) angeordnet sind, um je einen transversalen Teil (f1, ..., fk, ..., fn) der Welle aufzufangen und jeweils einer vorgegebenen globalen Verzögerung ($\tau$, ...,$k\tau$, ..., $n\tau$) zu unterwerfen;
   - mit n Amplitudenmodulatoren (MA1, ..., MAk, ..., MAn), die hinter der Einheit zur Erzeugung von Verzögerungen liegen, um je den entsprechenden transversalen Teil (f1, ..., fk, ...,fn) nach der Verzögerung der modulierten Lichtwelle aufzufangen und diesem transversalen verzögerten Teil eine vorgegebene Gewichtung ($\lambda_1$, ..., $\lambda_k$, ..., $\lambda_n$) zu verleihen;
   - mit mindestens einem Lichtkonzentrator (L; L1, ..., LJ), der hinter den Amplitudenmodulatoren liegt und die individuell verzögerten und gewichteten transversalen Teile (f1, ..., fk, ..., fn) der modulierten optischen Welle wieder zusammenfaßt;
   - und mit mindestens einem Photodetektor (PD; PD1, ... PDJ), der hinter dem Konzentrator liegt und die Summe der verzögerten und gewichteten sowie zusammengefaßten transversalen Teile empfängt und ein elektrisches Signal entsprechend der Summe liefert, wobei das so gelieferte elektrische Signal die aus dem zu filternden elektrischen Signal x(t) entnommene vorbestimmte Information bildet;

dadurch gekennzeichnet, daß

- das optische System (S, Mod) eine Lichtquelle (S), die eine gegebene Lichtwelle (F1) aussenden kann, und einen elektro-optischen Modulator (Mod) hinter der Lichtquelle enthält, der durch das zu filternde elektrische Signal x(t) gesteuert wird und die gegebene Lichtwelle (F1) in die durch das elektrische Signal x(t) zeitlich modulierte Lichtwelle (F2) verwandelt, welche außerdem linear polarisiert ist;
- die Einheit zur Erzeugung von Verzögerungen ($M_1$, $PBS_{11}$, $PBS_{12}$; ..., $M_i$, $PBS_{i1}$, $PBS_{i2}$; ..., $M_p$, $PBS_{p1}$, $PBS_{p2}$) p Untereinheiten ($M_i$, $PBS_{i1}$, $PBS_{i2}$) zur Erzeugung von Verzögerungen besitzt, die hintereinander im Verlauf der modulierten Lichtwelle (F2) liegen und je die Gesamtheit der Lichtwelle empfangen, wobei jede Untereinheit ($M_i$, $PBS_{i1}$, $PBS_{i2}$) einen räumlichen Polarisationsmodulator ($M_i$) mit n Bildelementen, die die ankommende Lichtwelle in n Elementarkanäle (f1, ..., fk, ..., fn) aufteilen und die Polarisation des in jedem dieser Kanäle übertragenen Lichts selektiv modulieren können, einen ersten Polarisationsseparator ($PBS_{i1}$) gemeinsam für die verschiedenen Elementarkanäle, um selektiv das Licht jedes Kanals (fk) abhängig von seiner Polarisation auf einen ersten optischen Weg einer bestimmten optischen Länge oder einen zweiten optischen Weg einer größeren optischen Länge zu schicken und so eine vorbestimmte Teilverzögerung ($2^{(i-1)}.\tau$) im Vergleich zum ersten optischen Weg zu induzieren, und ein Strahlkombinierorgan ($PBS_{i2}$) enthält, um die beiden optischen Wege jedes Kanals (fk) in einen gemeinsamen optischen Pfad zu kombinieren und das Licht jedes Kanals zum entsprechenden Bildelement des räumlichen Polarisationsmodulators der nächsten Untereinheit oder zum Photodetektor zu übertragen, wobei jedes der n Bildelemente der p aufeinanderfolgenden räumlichen Polarisationsmodulatoren ($M_1$, ..., $M_i$, ..., $M_p$) so selektioniert wird, daß das ihn durchlaufende Licht so moduliert wird, daß daraus für das sich auf einem gegebenen Kanal (fk) durch p aufeinanderfolgende Untereinheiten fortpflanzende Licht ein globaler optischer Pfad resultiert, der eine globale Verzögerung bestehend aus der selektiven Summe der partiellen Verzögerungen ($\tau$, $2\tau$, ..., $2^{(i-1)}\tau$, ..., $2^{(p-1)}\tau$) bildet, die dem vorbestimmten globalen Verzögerungswert (k·$\tau$) gleicht, wobei die n globalen optischen Wege des Lichts in den n Kanälen (f1, ..., fk, ..., fn) durch die p Untereinheiten die n Schaltungen (CR1, ..., CRk, ..., CRn) zur Erzeugung von Verzögerungen bilden, die die globalen vorgegebenen Verzögerungen ($\tau$, ..., k$\tau$, ..., n$\tau$) induzieren.

2. Filter nach Anspruch 1, dadurch gekennzeichnet, daß es eine Vorrichtung (BE) zur optischen Erweiterung besitzt, die den Querschnitt des vom elektro-optischen Modulator (Mod) übertragenen Strahls (F2) an die Fläche der räumlichen Polarisationsmodulatoren ($M_1$, ..., $M_p$) anpaßt.

3. Filter nach Anspruch 1, dadurch gekennzeichnet, daß der räumliche Modulator ($M_i$) jeder der Untereinheiten zur Erzeugung von Verzögerungen eine Flüssigkristallzelle enthält, die mindestens ebenso viele Bildelemente besitzt, wie Elementarkanäle zu erzeugen sind, wobei jedes Bildelement Steuermittel aufweist, die eine Drehung der Polarisationsrichtung des Lichts um 90° ermöglichen.

4. Filter nach Anspruch 1, dadurch gekennzeichnet, daß jeder Polarisationsseparator ($PBS_1$) in der Lage ist, das Licht der ersten Polarisation in einer im wesentlichen mit der Richtung des einfallenden Lichts fluchtenden Ausgangsrichtung an eine nachfolgende Untereinheit ($M_2$, $PBS_2$, $P_2$) oder zum Photodetektor zu übertragen und das Licht der zweiten Polarisation in einen zweiten optischen Weg zu lenken, der das Licht in einer zur Ausgangsrichtung kolinearen Richtung weiterleitet.

5. Filter nach Anspruch 4, dadurch gekennzeichnet, daß das Strahl-Kombinierorgan ($PBD_{i2}$) jeder Untereinheit einen Polarisationsseparator besitzt, der in Reihe mit dem ersten Separator ($PBS_{i1}$) in der Ausgangsrichtung angeordnet ist und die erste Polarisation überträgt, während der zweite optische Weg an diesen zweiten Polarisationsseparator ($PBS_{i2}$) so gekoppelt ist, daß das vom zweiten optischen Weg kommende Licht auf die Ausgangsrichtung reflektiert wird.

6. Filter nach Anspruch 1, dadurch gekennzeichnet, daß die Gesamtheit der Amplitudenmodulatoren (MA; MA1,... MAn) von einer Flüssigkristallzelle gebildet wird, die ebenso viele Bildelemente besitzt, wie es Elementarkanäle gibt, wobei jedes Bildelement in der Richtung eines Elementarkanals liegt.

7. Filter nach Anspruch 6, dadurch gekennzeichnet, daß jedes Bildelement der Flüssigkristallzelle zwei mögliche Übertragungszustände besitzt, nämlich einen durchlässigen und einen nichtdurchlässigen Zustand.

8. Filter nach Anspruch 1, dadurch gekennzeichnet, daß der Strahlkonzentrator (L) eine Linse (L) enthält.

9. Linse nach Anspruch 1, dadurch gekennzeichnet, daß der Konzentrator J Linsen (L1, ..., LJ) besitzt, auf die eine gleiche Anzahl von Photodetektoren (PD1, ..., PDJ) folgt, wobei jede Linse das Licht einer bestimmten Anzahl (n') von Kanälen auf einen entsprechenden Photodetektor lenkt.

**10.** Filter nach Anspruch 1, dadurch gekennzeichnet, daß der erste und der zweite optische Weg jeder Untereinheit die gleiche geometrische Länge besitzen, wobei einer der beiden Wege zusätzlich ein Plättchen (PF) mit parallelen Flächen besitzt.

**11.** Filter nach Anspruch 10, dadurch gekennzeichnet, daß in jeder Untereinheit das Licht mit der ersten Polarisation, das vom ersten Polarisationsseparator ($PBS_{1i}$) durchgelassen wurde, von einer ersten Reflexionsvorrichtung (p1) zu einem zweiten Polarisationsseparator ($PBS_{2i}$) abgelenkt wird und daß das Licht mit der zweiten Polarisation, das von dem ersten Polarisationsseparator ($PBS_{1i}$) abgelenkt wurde, von einer zweiten Reflexionsvorrichtung (P2i) zum zweiten Polarisationsseparator ($PBS_{2i}$) so abgelenkt wird, daß letzterer die Lichtanteile der beiden Polarisationen kolinear macht.

**12.** Filter nach Anspruch 11, dadurch gekennzeichnet, daß die verschiedenen Untereinheiten zur Erzeugung von Verzögerungen, die in Reihe angeordnet sind, Plättchen mit parallelen Flächen, aber unterschiedlicher Dicke besitzen.

**13.** Transversalfilter nach Anspruch 12, dadurch gekennzeichnet, daß die Amplitudenmodulatoren (MA1, ..., MAn), die in den jeweiligen Elementarkanälen (f1, ..., fn) liegen, von einem räumlichen Modulator gebildet werden, der mehrere Bildelemente pro Kanal besitzt, wobei jedes Bildelement zwei mögliche optische Zustände (durchlässig oder nichtdurchlässig) besitzt und die Anzahl von im durchlässigen Zustand ausgewählten Bildpunkten die Zuordnung der vorbestimmten Gewichtung ($\lambda_k$) zum Wert der Verzögerung des Kanals (fk) erlaubt.

**14.** Transversalfilter nach Anspruch 3, dadurch gekennzeichnet, daß jede Flüssigkristallzelle ($M_i$) mehrere Gruppen von Bildelementen aufweist, wobei jede Gruppe einem Kanal zur Erzeugung einer Verzögerung entspricht.

**15.** Filter nach Anspruch 1, dadurch gekennzeichnet, daß die Elemente jeder Untereinheit zur Erzeugung von Verzögerungen so angeordnet sind, daß ihre Verzögerungen von einer Untereinheit zur nächsten gemäß einer geometrischen Reihe ($\tau$, $2\tau$ ..., $2^{(i-1)}\tau$, ..., $2^{(p-1)}\tau$) definiert sind, wobei die Zahl p von Untereinheiten abhängig von der Zahl n von elementaren Kanälen gewählt wird, die für jeden Polarisationsmodulator ($M_1$, ..., $M_p$) erzeugt werden, sodaß gilt: $2^p = n$.

**16.** Filter nach Anspruch 15, dadurch gekennzeichnet, daß n den Wert 1024 hat und p dann den Wert 10.

**17.** Filter nach Anspruch 1, dadurch gekennzeichnet, daß es so angeordnet ist, daß die vorbestimmte globale Verzögerung (k·$\tau$), die dem entsprechenden Kanal (fk) zugeordnet ist, sich von den Verzögerungen ($\tau$, $2\tau$, ..., n·$\tau$) unterscheidet, die den anderen Kanälen (f1, f2, ... fn) zugeordnet sind.

## Claims

**1.** Transverse filter for extracting a specified information item from a given electrical signal x(t) comprising:

- an optical system (S, Mod) able to emit an optical wave (F2) which is temporally modulated by the electrical signal x(t) to be filtered;
- a unit for creating optical delays (M1, PBS11, PBS12; ... Mi, PBSi1, PBSi2; ... Mp, PBSp1, PBSp2), comprising a plurality n of delay creation circuits (CR1, ... CRk, ... CRn) arranged in parallel with one another along the route of the modulated optical wave (F2) in such a way as each to intercept a respective transverse portion (f1, ... fk, ... fn) of the said wave and to endow this respective transverse portion with a predetermined global delay ($\tau$, ... k.$\tau$, ... n.$\tau$);
- a plurality n of amplitude modulators (MA1, ..., MAk, ... MAn) arranged downstream of the said delay creation unit in such a way as each to intercept the corresponding transverse portion (f1, ... fk, ... fn) thus delayed of the modulated optical wave so as to endow this delayed transverse portion with a predetermined weighting ($\lambda$1, ... $\lambda$k, ... $\lambda$n);
- at least one light concentrator (L; L1, ... LJ) arranged downstream of the said amplitude modulators in such a way as to group the said transverse portions (f1, ... fk, ... fn) thus individually delayed and weighted of the modulated optical wave; and
- at least one photodetector (PD; PD1 ... PDJ) arranged downstream of the said concentrator in such a way as to receive the sum of the said delayed and weighted transverse portions thus grouped so as to deliver an electrical signal corresponding to the said sum, the said electrical signal thus delivered constituting the said predetermined information item extracted from the said electrical signal x(t) to be filtered;

characterized in that:

- the optical system (S, Mod) comprises an optical source (S) able to emit a given optical wave (F1), and an electro-optical modulator (Mod) arranged downstream of the optical source, able to be controlled by the said electrical signal x(t) to be filtered so as to transform the given optical wave (F1) into the said optical wave (F2) temporally modulated by the said electrical signal x(t), the said modulated optical wave (F2) moreover being linearly polarized; and

- the delay creation unit (M1, PBS11, PBS12; ...; Mi, PBSi1, PBSi2; ...; Mp, PBSp1, PBSp2) comprises a plurality p of delay creation sub-units (Mi, PBSi1, PBSi2) placed in series following one another along the route of the modulated optical wave (F2) in such a way as each to intercept the entirety of the said optical wave; each sub-unit (Mi, PBSi1, PBSi2) comprises a spatial polarization modulator (Mi) exhibiting n image elements able to divide the upstream optical wave into n elementary channels (f1, ... fk, ... fn) and selectively to modulate the polarization of the light which is to be conveyed on each of the said channels, a first polarization splitter (PBSi1) common to the various elementary channels for selectively routing the light of each channel (fk), as a function of its polarization, to a first optical path of given optical length or a second optical path of greater optical length inducing a predetermined partial delay ($2^{i-1}.\tau$) with respect to the first optical path, and a beam combiner (PBSi2) for recombining the two optical paths of each channel (fk) into a common optical path able to transmit the light of each channel towards the corresponding image element of the spatial polarization modulator of the next sub-unit or to the photodetector; each of the said n image elements of the said p successive spatial polarization modulators (M1, ... Mi, ... Mp) being selected so as to modulate the light passing through it in such a way that there results, for the light propagating over a given channel (fk) through the p successive sub-units, a global optical path inducing a global delay, consisting of the selective sum of the said partial delays ($\tau$, $2\tau$, ... $2^{i-1}.\tau$, ... $2^{p-1}.\tau$), which is chosen to be equal to the said predetermined global delay (k.$\tau$); the said n global optical paths followed by the light on the said n channels (f1, ... fk, ... fn) through the said p sub-units constituting the said n delay creation circuits (CR1, ... CRk, ... CRn) inducing the said predetermined global delays ($\tau$, ... k$\tau$, ... n.$\tau$).

2. Filter according to Claim 1, characterized in that it comprises an optical expansion device (BE) adapting the cross section of the beam (F2) transmitted by the electro-optical modulator (Mod) to the surface area of the spatial polarization modulators (M1, ... Mp).

3. Filter according to Claim 1, characterized in that the spatial modulator (Mi) of each of the delay creation sub-units comprises a liquid crystal cell comprising at least as many image elements as there are elementary channels to be created, each image element comprising control means making it possible to rotate the direction of polarization of light through 90°.

4. Filter according to Claim 1, characterized in that each polarization splitter (PBS1) is adapted so as to transmit the light of the first polarization in the exit direction substantially colinear with the direction of the incident light to a next sub-unit (M2, PBS2, P2) or to the photodetector and so as to reflect the light of the second polarization towards the second optical path, which retransmits the light in a direction colinear with the exit direction.

5. Filter according to Claim 4, characterized in that the beam combiner (PBSi2) of each sub-unit comprises a polarization splitter placed in series with the first splitter (PBSi1) in the exit direction transmitting the first polarization, the second optical path being coupled to this second polarization splitter (PBSi2) so that the light originating from the second optical path is reflected in the exit direction.

6. Filter according to Claim 1, characterized in that the unit of amplitude modulators (MA, ... MA1, ... MAn) consists of a liquid crystal cell comprising as many image elements as there are elementary channels, each image element being placed in the direction of an elementary channel.

7. Filter according to Claim 6, characterized in that each image element of the liquid crystal cell has two possible states of transmission: passing state and blocked state.

8. Filter according to Claim 1, characterized in that the beam concentrator (L) comprises a lens (L).

9. Filter according to Claim 1, characterized in that the concentrator comprises a number J of lenses (L1,...,LJ), the said lenses being followed by an identical number of photodetectors (PD1, ... PDJ), each lens focusing the light from a specified number (n') of channels onto a corresponding photodetector.

10. Filter according to Claim 1, characterized in that the first and the second optical paths of each sub-unit have the same geometrical length, one of the two paths furthermore comprising a parallel-sided plate (PF).

11. Filter according to Claim 10, characterized in that in each sub-unit, the light of the first polarization transmitted by the first polarization splitter (PBS1i) is reflected by a first reflection device (p1) towards a second polarization splitter (PBS2i) and that the light of the second polarization reflected by the first polarization splitter (PBS1i) is reflected by a second reflection device (P2i) towards the second polarization splitter (PBS2i) so that the latter renders the light of the two polarizations colinear.

12. Filter according to Claim 11, characterized in that the various delay creation sub-units arranged in series comprise parallel-sided plates of different thicknesses.

13. Transverse filter according to Claim 12, characterized in that the said plurality of amplitude modulators (MA1, ... MAn) situated on the respective elementary channels (f1, ... fn) consists of a spatial modulator (MA) comprising several image elements per channel, each image element having two possible optical states (blocking or passing), the number of image elements selected in the passing state making it possible to assign the said predetermined weight ($\lambda$k) to the value of the delay of the said channel (fk).

14. Transverse filter according to Claim 3, characterized in that each liquid crystal cell (Mi) comprises several groups of image elements, each group corresponding to a delay creation channel.

15. Filter according to Claim 1, characterized in that the constituent elements of each delay creation sub-unit are configured in such a way as to define delays which vary, from one sub-unit to the next, according to a geometric progression ($\tau$, $2\tau$, ... $2^{i-1}.\tau$, ... $2^{p-1}.\tau$), the number p of sub-units then being chosen as a function of the number n of elementary channels generated by each polarization modulator (M1, ... Mp) in such a way that $2^p = n$.

16. Filter according to Claim 15, characterized in that n is chosen equal to 1024, p then being equal to 10.

17. Filter according to Claim 1, characterized in that it is configured so that the predetermined global delay (k.$\tau$) assigned to the corresponding channel (fk) is different from the delays ($\tau$, $2\tau$, ... n.$\tau$) assigned to the other channels (f1, f2, ... fn).

FIG.1

FIG.2

FIG.3

FIG.4

FIG.5

FIG.6